# EUROPEAN PATENT SPECIFICATION

(11) **EP 0 670 972 B1**
(45) Date of publication and mention of the grant of the patent: **29.03.2000**
(21) Application number: 94927763.6
(22) Date of filing: 03.10.1994
(51) Int. Cl.: F16D 66/02

(54) **BRAKE WEAR SENSOR**
BREMSBELAG-VERSCHLEISS-DETEKTOR
DETECTEUR D'USURE DES FREINS

(30) Priority: 02.10.1993 GB 9320369
(43) Date of publication of application: 13.09.1995
(73) Proprietor: Meritor Automotive, Inc., Troy, Michigan 48084 (US)
(72) Inventor: POOLE, Ian, Douglas, Solihull, West Midlands B90 4RG (GB); WARD, Andrew, John, Birmingham B13 0PT (GB)
(74) Representative: Spall, Christopher John
(86) International application number: GB9402140
(87) International publication number: WO9509991

(56) References cited:
- EP-A- 0 492 143
- DE-A- 2 248 927
- DE-A- 4 017 951
- DE-A- 4 017 952
- DE-A- 4 017 953
- DE-A- 4 212 407
- DE-A- 4 230 831
- DE-A- 4 243 875
- US-A- 2 002 139
- US-A- 3 339 676

## Description

This invention relates to brake lining wear monitoring means particularly for use with vehicle brakes of a kind in which a friction lining has an operative face adapted to be applied to a rotatable braking member, such as a drum or a disc.

In drum brakes it is known to provide brake shoes with adjustment means such that as the lining on the brake shoes wears the position of the brake shoes is adjusted to maintain an operative relationship between the operative face of the brake lining and the brake drum. Thus, it can be seen that the amount of adjustment of the brake shoe position is indicative of the wear on the brake shoes.

In US-A-2 002 139, a gear wheel is driven from the brake shoe adjustment means. The gear wheel in turn is connected by way of a flexible drive shaft to an indicating drum. As the brake lining wears the adjustment means act to maintain the linings in position in relation to the brake drum and thereby rotate the gear wheel, which in turn causes the drive shaft to move the indicating drum.

In US-A-3 339 676, the adjustment means is provided with a rack portion which co-operates with a gear of a gear driven rheostat. As the adjustment means moves the brake shoes, the gear is rotated to drive the rheostat.

More recently it has been known to locate potentiometers within the brake linings. In such constructions the output signal from the potentiometer varies as it is worn away together with the brake lining.

There are disadvantages to these constructions. In particular in all of these sensors the indicating means are cycled on each brake application requiring high manufacturing tolerances and durability from the parts involved.

Locating a potentiometer in the brake housing presents further difficulties in that not only is the potentiometer cycled through a high temperature environment on braking, but must also operate in a cooler environment when the brakes are not being applied.

EP-A-0 492 143 provides a partial solution to these problems. A lining wear indicator is shown with an adjustment device having a rotary adjustment element located in an adjustment device in which the adjustment element is designed as an angle of rotation indicator for sensing the lining wear and the end of the adjustment element faces away from the brake discs. In this way the wear sensor is largely unaffected by temperatures.

According to one aspect, the invention provides a brake assembly incorporating a brake lining wear monitoring means for monitoring the wear condition of at least one brake lining of the brake assembly comprising actuating means for applying the brake lining to a brake rotor and adjuster means adapted to be driven by the actuating means for the purpose of maintaining the brake lining in close proximity to the brake rotor, in which a wear sensing means is provided and driven by said adjuster means, a change in output from the wear sensing means only occurring upon actuation of the adjuster means, and the wear sensing means being mounted integrally with the adjuster means and characterised in that the wear sensing means is housed in a body inserted into the brake assembly to be rotatable with respect to said brake assembly.

The actuation of the sensor is dependant on actuation of the adjuster means and not upon actuation of the brake. This immediately reduces the number of cycles that this part must undergo during the lifetime of the brake lining.

By mounting the wear sensing means integrally with the adjustment means it is possible to provide for a one piece assembly that may be constructed externally from the housing. This eliminates the need to drill in from the other side of the housing to provide means for securing the wear sensing means as it is built up within the brake housing.

The limit of said rotation may be defined by a clearance between an extension of said body and a portion of said brake housing.

Preferably a limited amount of unrestricted movement (free play) is provided between the wear sensor input drive and the adjuster means in order to prevent actuation of the wear sensing means due to movement of the wear sensor body within the housing.

Alternatively, the extension of the wear sensor body is adapted to guide and locate the connecting cable.

Preferably, in this latter case, the extension of the wear sensor body guides a sensor cable to a location where the sensor cable exits the brake housing.

Preferably, the wear sensing means comprises a rotary potentiometer. The potentiometer in turn, may comprise a printed circuit board mounted multi-turn trimming potentiometer protected from the surrounding environment by encapsulation within a temperature resistant material.

In another construction the wear sensing means may comprise a linear potentiometer.

The invention will now be described, by way of example only, with reference to the accompanying figures, in which:
Figure 1 shows a disc brake assembly in part section including a brake wear sensor;
Figure 2 shows the brake wear sensor in section;
Figure 3 shows an end view of a drive assembly for use with the sensor;
Figure 4 shows in section the wheel adjuster and drive shaft of the drive assembly; and
Figure 5 shows in part section a further embodiment of the disc brake assembly.

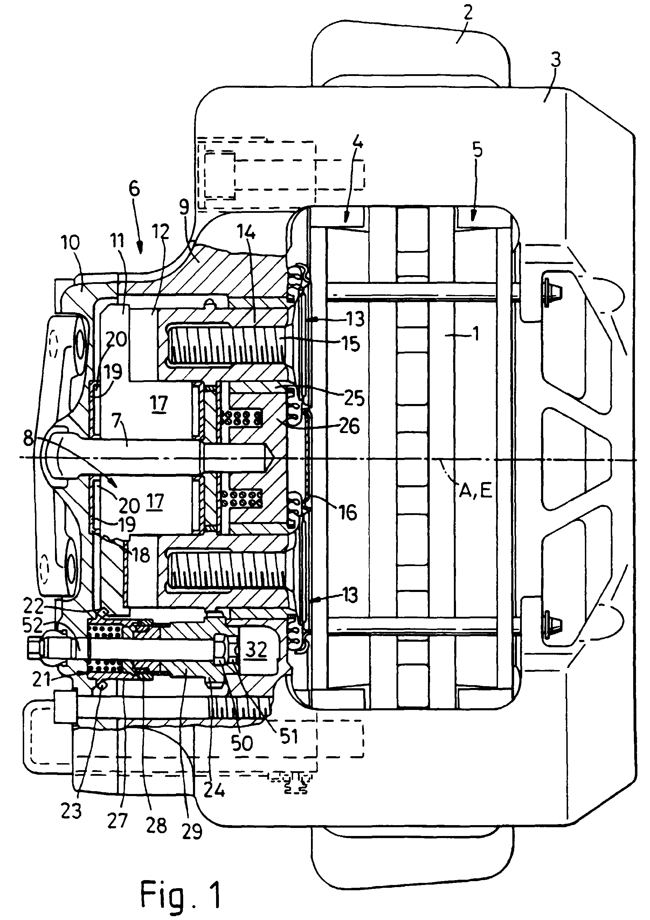

Referring to Figure 1, a disc brake is shown suitable for use with the present invention. The brake comprises a brake disc 1 and a brake carrier member 2. A floating caliper 3 encloses two brake pads 4,5 adapted to be urged towards a respective side of said brake disc. A friction lining is attached to each of the brake pads for engagement with opposite faces of the disc.

A brake actuating device 6 is provided to actuate the left brake pad in Figure 1, i.e. the inner brake pad 4 as regards the arrangement of the brake in a vehicle, to urge this brake pad to the right in Figure 1 against the brake disc 1. Forces of reaction result as the inner brake pad 4 is urged into contact with the brake disc 1, and these reactive forces displace the floating caliper 3 to the left in Figure 1, thereby pressing also the outer brake pad 5 which is supported on the floating caliper against the brake disc 1.

The actuator member 7 is an integral part of a rotary member 8 which is enclosed by a casing 9 and its cover 10. Two adjustable tappets 13 are provided in the casing 9 of the actuating device 10. Each of these tappets comprises a first threaded member 14 and a second threaded member 15 and the tappets are disposed at either side of a plane of symmetry E, parallel to and spaced from the same. The two second threaded members 15 are interconnected by a thin metal plate 16 so that they cannot rotate, the metal plate at the same time serving as a heat shield.

The rotary member 8 comprises two eccentrics 11 which are arranged in a terminal zone of the rotary member, acting through a cylindrical roller body 12 each on a respective one of the first threaded members 14. The rotary member 8 is formed with a pair of journal pins 17 between the two eccentrics 11 which journal pins are supported in a depression 18 at the inside of the cover 10 of the casing through an outer ring 19 of a respective needle bearing 20 each. Both first threaded members 14 are connected to the rotary member 8 by a gear connection which comprises an angle drive and a coupling arrangement 20. Also the angle drive is formed by meshing bevel teeth 22 and 23. A pinion 24 engages directly in external toothing 25 on the adjacent first threaded member 14 and only then does an intermediate gear 26 follow which meshes with the external toothings of both first threaded members.

The pinion 24 is formed with an inner hexagon 50 which is associated with an outer hexagon 51 found on the return shaft 52.

On actuation of the brake, rotation of the rotary member 8 caused by the pivoting of the actuator member 7 is converted by the angle drive formed by the two bevel toothings 22 and 23 into rotation of a first sleeve 27 supported on the return shaft of the coupling arrangement. Once a rotational clearance has been overcome between discs 28 of the coupling arrangement and a second sleeve 29, also supported on the return shaft, a torque will act on the second sleeve 29, via a wrap spring 30, onto the pinion 24 and finally onto the first threaded member 14 by way of the intermediate gear 26 and the external toothing 25.

The threaded member, however, will not rotate if a brake release clearance, has been overcome by the above mentioned rotational clearance so that the two brake pads 4, 5 have engaged the brake disc 1 which consequently transmits a reactive force, in correspondence with the actuating force, to the two eccentrics 11 through the tappet formed by the two threaded members 14, 15. The friction occurring in the readjustment thread pair 13 on that occasion is greater than the torque which the coupling 21 can transmit.

If the rotational clearance between the discs 28, and the second sleeve 29 is overcome upon actuation of the brake and the brake pads 4, 5 do not reach the brake disc 1 to give rise to a corresponding reactive force, rotation of the first sleeve 27 will be transmitted through the stack of discs 28 to the second sleeve 29 and on through the wrap spring 30 to the pinion 24 and finally to the first threaded member 14 which consequently will be turned in the sense that the tappet it presents together with the second threaded member 15 becomes longer.

On release of the brake, the rotational movement of the rotary member 8, which is now in the opposite sense, is transmitted to the first sleeve 27 but not further on to the pinion 24 because, in this direction of rotation, the wrap spring 30 opens and thus prevents the pinion 24 from accompanying the rotational movement.

Thus, it can be seen that by driving wear sensing means comprising a sensor 32 from the coupling arrangement 20, the sensor 32 will only be cycled when the rotational clearance between the discs 28 and the second sleeve 29 has been overcome, that is when a predetermined brake clearance is exceeded and the auto-adjuster operates to move the brake pads 4,5 to a new optimum position in relation to the brake disc 1.

It is convenient to make the adjuster load insensitive. In this way, if the brakes are applied too hard, the adjuster slips to prevent over adjustment and rotation of the potentiometer that would give rise to a false signal.

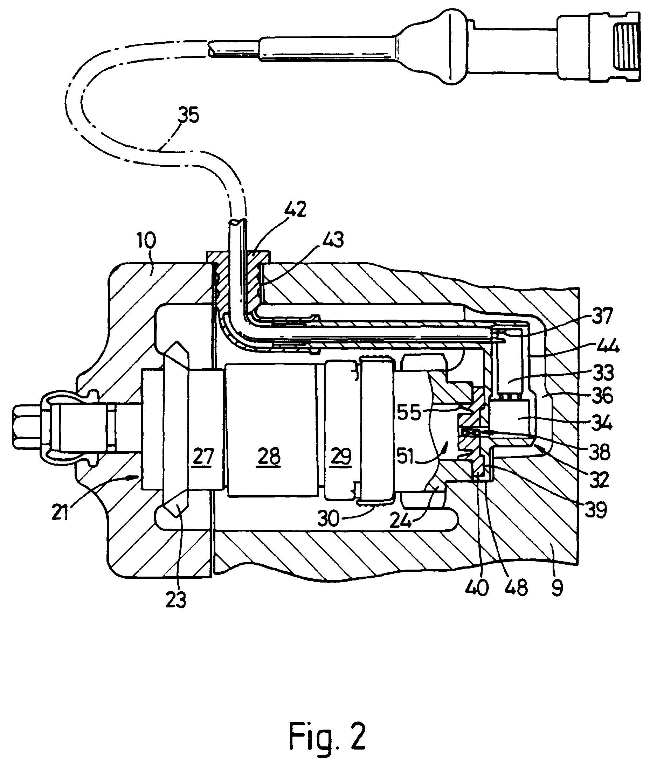

The sensor 32 comprises a band wear sensor which is located in a cavity of a caliper housing 3 in to which the coupling arrangement 21 extends. The band wear sensor is shown in greater detail in Figure 2.

The main component within the sensor 32 is a printed circuit board 33 mounted on a multi turn trimming rotary potentiometer 34.

The potentiometer 34 is connected to a drive pin 38 within the coupling arrangement 21. The drive pin is guided within the sensor housing 39 to provide an increased bearing length and to aid in centralising the drive pin 38 to the drive mechanism of the coupling arrangement 21.

The potentiometer is mounted with a cable 35 enclosing wires attached in a housing 34 that allows the potentiometer and the wires to be encapsulated to provide a sealed chamber 36 for the potentiometer 34 and the wire connections 37.

The housing 39 also allows the sensor 32 to rotate with respect to the brake assembly. The degree of rotation is defined by a clearance between the extension 44 of the housing and the walls 46 of the cavity in the brake housing into which the sensor assembly is fitted.

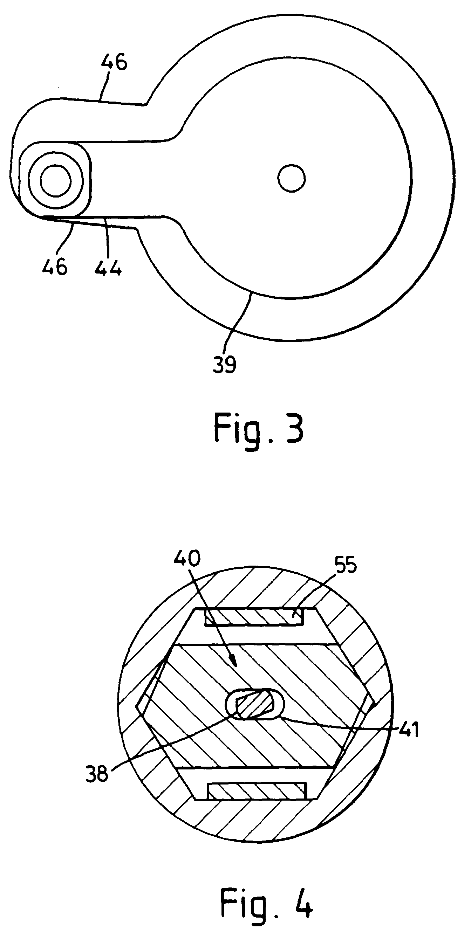

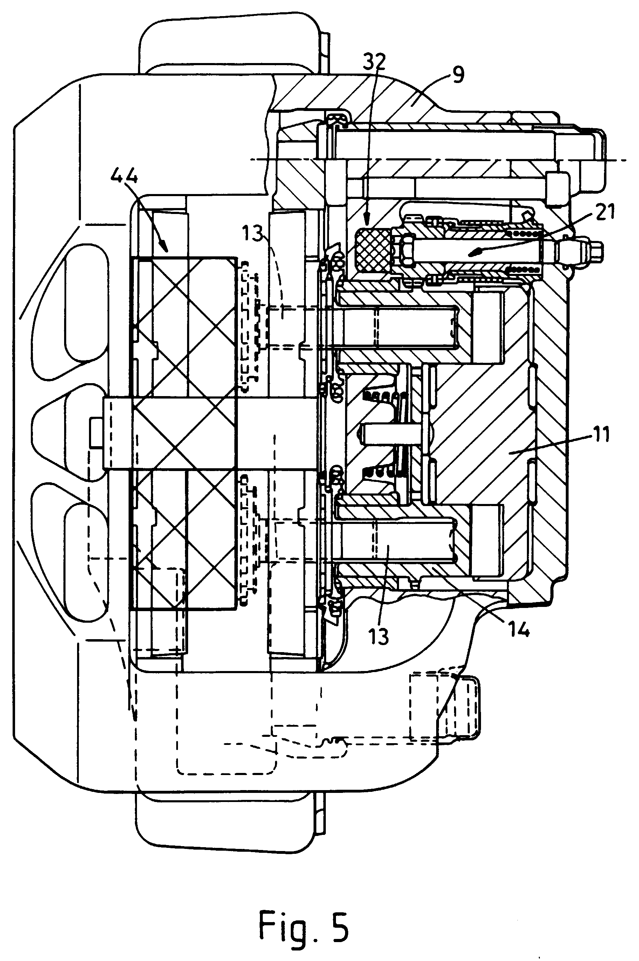

The sensor 32 as indicated is designed to be driven from the brake auto-adjustment mechanism. The drive interface allows for a connection between the hexagon drive 40 in the adjuster wheel and the potentiometer drive pin 38 as shown in Figures 3 and 4.

The hexagon drive disc 40 is located between the pinion 24 and the sensor housing 39. The drive disc 40 is provided with a drive slot 41 through which the drive pin 38 extends. The drive disc 40 is provided with legs 55 which engage the inner surface of the outer hexagon 51 as shown in Figure 2.

By suitable sizing of the drive slot 41 in the drive disc 40, this arrangement provides for sufficient backlash within the drive mechanism to prevent vibrational movement of the sensor assembly causing rotation of the potentiometer. The backlash is equivalent to the free travel and is sufficient to avoid ripple occurring in the output of the sensor. On de-adjustment of the brake, some impact resistance is provided to avoid damage to the sensor's main element should excessive force be used in engaging the de-adjuster stem 38 by earthing out the load through the hexagon, the potentiometer housing and finally an abutment surface 48 on the brake housing.

The cable 35 enclosing the electrical wires connected to the sensor element must exit the brake housing cavity at source point. This chamber 36 must remain sealed from atmospheric contaminants when the sensor is installed. A D-shaped wire seal 42 fits onto the wire and into a D-shaped slot 43 machined into the brake housing at the cover plate 10 to housing 9 outer face.

Conveniently the wires enclosed by the cable 35 are all directed away from the printed circuit board 33 and are guided towards the exit to the brake housing by the extension 44 to the sensor housing.

This design has the advantage that the sensor 32 and coupling arrangement can be completely assembled before fitment into the brake assembly.

In order to operate effectively, the sensor 32 and the brake have to be assembled with the relationship between them known to enable the rotation of the adjuster to be monitored such that the electrical output can be related to the total pad lining wear.

To obtain this relationship the sensor assembly is first fitted to the end of the auto-adjuster mechanism (coupling arrangement 21). The auto-adjuster and sensor are then installed into the brake assembly. The gears on the tappet housing (first threaded member 14) and the adjacent eccentric 11 without rotating the sensor element.

The brake illustrated in Figure 5 of the drawings is similar in construction to the brake of Figure 1-4, and corresponding reference numerals have been applied to corresponding parts. This brake is illustrated in order to explain the set up of setting the tappets 11. As illustrated a setting block 44 is placed between the face of the outboard brake pad 4 and the face of the tappets 11. At this point the tappets are not connected to the metal plate 16 and can be rotated. The individual tappets are then moved into a forward position to clamp the setting block 45 in place, as indicated by the dashed lines in Figure 5.

The setting block 44 is then removed from the brake and the metal plate 16 fitted to the tappets 11. By the use of the auto adjuster, the tappets 11 are then wound back to a predetermined position which may for example represent the condition in which the brake linings are unworn.

While not illustrated, it is proposed that the sensor 32 be driven from other parts of the auto-adjuster that do not cycle with each brake application. For example, in braking arrangements where the tappets are run from a gear train, the sensor may be designed to be driven by a gear train. Also, while the illustrated embodiments relates to a disc brakes actuated by tappets, the principles involved can likewise be applied to drum brakes and hydraulic brakes.

In another modification, the rotary potentiometer 34 may be replaced by a linear potentiometer. In such a construction a rotary input driving lead screw acts to drive a resistive element, suitably in the form of a wiper, along a linear track.

In operation of this modified construction the wiper is movable along the track with a wiping action, once only for each adjustment cycle.

## Claims

1. A brake assembly incorporating a brake lining wear monitoring means for monitoring the wear condition of at least one brake lining of the brake assembly comprising actuating means (6) for applying the brake lining to a brake rotor (1) and adjuster means (8) adapted to be driven by the actuating means for the purpose of maintaining the brake lining in close proximity to the brake rotor, in which a wear sensing means (32) is provided and driven by said adjuster means (8), a change in output from the wear sensing means only occurring upon actuation of the adjuster means, and the wear sensing means being mounted integrally with the adjuster means, and characterised in that the wear sensing means (32) is housed in a body inserted into the brake assembly (9) to be rotatable with respect of the housing of the brake assembly.

2. A brake assembly incorporating a brake lining wear monitoring means according to claim 1, in which the limit of said rotation is defined by the clearance between an extension of the body and a portion of the brake housing.

3. A brake assembly incorporating a brake lining wear monitoring means according to claim 1 or claim 2, in which the wear sensing means is fitted between the walls of a cavity in the housing and unrestricted movement is provided between an input drive and the adjuster means in order to prevent actuation of the wear sensing means due to movement of the body within the housing.

4. A brake assembly incorporating a brake lining wear monitoring means according to claim 1 or claim 2, in which an extension of the body is adapted to guide and locate a connecting cable (35).

5. A brake assembly incorporating a brake lining wear monitoring means according to claim 4, in which the extension of the body guides the connecting cable to a location from which the cable exits from the brake housing.

6. A brake assembly incorporating a brake lining wear monitoring means according to any preceding claim, in which the wear sensing means comprises a rotary potentiometer.

7. A brake assembly incorporating a brake lining wear monitoring means according to claim 6, in which the potentiometer comprises a printed circuit board mounted multi-turn trimming potentiometer protected from the surrounding environment by encapsulation within a temperature resistant material.

8. A brake assembly incorporating a brake lining wear monitoring means according to any of claims 1-5, in which the wear sensing means comprises a linear potentiometer.

9. A brake assembly incorporating a brake lining wear means according to claim 8, in which a linear driving lead screw acts to drive a resistive element along a linear track once only for each operation of the adjuster means.

## Patentansprüche

1. Bremsaufbau, umfassend eine Einrichtung zum Überwachen des Verschleißes von Bremsbelägen, um den Verschleißzustand mindestens eines Bremsbelages des Bremsaufbaus zu überwachen, mit einer Betätigungseinrichtung (6) zum Anlegen des Bremsbelages an einen Bremsrotor (1) und einer Einstelleinrichtung (8), die dafür eingerichtet ist, durch die Betätigungseinrichtung angetrieben zu werden, um den Bremsbelag in unmittelbarer Nähe zum Bremsrotor zu halten, worin eine einen Verschleiß abfühlende Einrichtung (32) vorgesehen ist und durch die Einstelleinrichtung (8) angetrieben wird, wobei eine Änderung in der Ausgabe von der einen Verschleiß abfühlenden Einrichtung nur auf eine Betätigung der Einstelleinrichtung hin stattfindet und die einen Verschleiß abfühlende Einrichtung einteilig mit der Einstelleinrichtung montiert ist, und dadurch gekennzeichnet, daß die einen Verschleiß abfühlende Einrichtung (32) in einem Körper untergebracht ist, der in den Bremsaufbau (9) eingesetzt ist, um bezüglich des Gehäuses des Bremsaufbaus drehbar zu sein.

2. Bremsaufbau mit einer Einrichtung zum Überwachen des Verschleißes von Bremsbelägen nach Anspruch 1, worin die Grenze der Drehung durch den Zwischenraum zwischen einer Verlängerung des Körpers und einem Teil des Bremsgehäuses definiert ist.

3. Bremsaufbau mit einer Einrichtung zum Überwachen des Verschleißes von Bremsbelägen nach Anspruch 1 oder Anspruch 2, worin die einen Verschleiß abfühlende Einrichtung zwischen den Wänden eines Hohlraums im Gehäuse eingepaßt ist und eine unbeschränkte Bewegung zwischen einem Eingangsantrieb und der Einstelleinrichtung vorgesehen ist, um eine Betätigung der einen Verschleiß abfühlenden Einrichtung aufgrund einer Bewegung des Körpers innerhalb des Gehäuses zu verhindern.

4. Bremsaufbau mit einer Einrichtung zum Überwachen des Verschleißes von Bremsbelägen nach Anspruch 1 oder Anspruch 2, worin eine Verlängerung des Körpers dafür eingerichtet ist, ein Verbindungskabel (35) zu führen und anzuordnen.

5. Bremsaufbau mit einer Einrichtung zum Überwachen des Verschleißes von Bremsbelägen nach Anspruch 4, worin die Verlängerung des Körpers das Verbindungskabel zu einer Stelle führt, von der das Kabel aus dem Bremsgehäuse austritt.

6. Bremsaufbau mit einer Einrichtung zum Überwachen des Verschleißes von Bremsbelägen nach einem der vorhergehenden Ansprüche, worin die einen Verschleiß abfühlende Einrichtung ein Drehpotentiometer umfaßt.

7. Bremsaufbau mit einer Einrichtung zum Überwachen des Verschleißes von Bremsbelägen nach Anspruch 6, worin das Potentiometer ein auf einer gedruckten Schaltung montiertes Wendel-Trimmpotentiometer umfaßt, das durch Einkapselung innerhalb eines temperaturbeständigen Materials vor der Umwelt geschützt ist.

8. Bremsaufbau mit einer Einrichtung zum Überwachen des Verschleißes von Bremsbelägen nach einem der Ansprüche 1 - 5, worin die einen Verschleiß abfühlende Einrichtung ein lineares Potentiometer umfaßt.

9. Bremsaufbau mit einer Einrichtung zum Überwachen des Verschleißes von Bremsbelägen nach Anspruch 8, worin eine lineare antreibende Verstellschraubenspindel dahingehend wirkt, ein Widerstandselement entlang einer linearen für jede Betätigung der Einstelleinrichtung nur einmal anzutreiben.

## Revendications

1. Un ensemble de frein comportant des moyens de contrôle de l'usure de la garniture de frein pour contrôler la condition d'usure d'au moins une garniture de frein de l'ensemble de frein comprenant des moyens d'actionnement (6) pour serrer la garniture de frein contre un rotor de frein (1) et des moyens de rattrapage (8) conçus pour être entraînés par les moyens d'actionnement dans le but de maintenir la garniture de frein en étroite proximité du rotor de frein, dans lequel des moyens détecteurs d'usure (32) sont prévus et sont entraînés par lesdits moyens de rattrapage (8), un changement dans le signal de sortie des moyens détecteurs d'usure ne se produisant qu'à la suite d'un actionnement des moyens de rattrapage et les moyens détecteurs d'usure étant montés intégralement avec les moyens de rattrapage et caractérisé en ce que les moyens détecteurs d'usure sont logés dans un corps inséré dans l'ensemble de frein (9) de façon à pouvoir tourner par rapport audit logement de l'ensemble de frein.

2. Un ensemble de frein comportant des moyens de contrôle de l'usure de la garniture de frein selon la revendication 1, dans lequel la limite de ladite rotation est définie par un intervalle libre entre un prolongement du corps et une partie du logement de frein.

3. Un ensemble de frein comportant des moyens de contrôle de l'usure de la garniture de frein selon la revendication 1 ou la revendication 2, dans lequel les moyens détecteurs d'usure sont adaptés entre les parois d'une cavité formée dans le carter et un mouvement non entravé est permis entre un organe d'entraînement d'entrée et les moyens de rattrapage afin d'empêcher l'actionnement des moyens détecteurs d'usure dû au mouvement du corps à l'intérieur du logement.

4. Un ensemble de frein comportant des moyens de contrôle de l'usure de la garniture de frein selon la revendication 1 ou la revendication 2, dans lequel un prolongement du corps est agencé de façon à guider et positionner un câble de connexion (35).

5. Un ensemble de frein comportant des moyens de contrôle de l'usure de la garniture de frein selon la revendication 4, dans lequel le prolongement du corps guide le câble de connexion jusqu'à un emplacement à partir duquel le câble sort du logement de frein.

6. Un ensemble de frein comportant des moyens de contrôle de l'usure de la garniture de frein selon une quelconque revendication précédente, dans lequel les moyens détecteurs d'usure comprennent un potentiomètre rotatif.

7. Un ensemble de frein comportant des moyens de contrôle de l'usure de la garniture de frein selon la revendication 6, dans lequel le potentiomètre comprend un potentiomètre d'équilibrage à spires multiples monté sur une plaquette de circuit imprimé protégé du milieu environnant par enrobage dans une matière résistant à la température.

8. Un ensemble de frein comportant des moyens de contrôle de l'usure de la garniture de frein selon l'une quelconque des revendication 1 - 5 dans lequel les moyens détecteurs d'usure comprennent un potentiomètre linéaire.

9. Un ensemble de frein comportant des moyens de contrôle de l'usure de la garniture de frein selon la revendication 8, dans lequel une vis-mère d'entraînement linéaire sert à entraîner un élément résistant le long d'une piste linéaire une fois seulement lors de chaque actionnement des moyens de rattrapage.
